# EUROPÄISCHE PATENTSCHRIFT

(11) **EP 1 077 526 B1**
(45) Veröffentlichungstag und Bekanntmachung des Hinweises auf die Patenterteilung: **14.06.2006**
(21) Anmeldenummer: 00116547.1
(22) Anmeldetag: 01.08.2000
(51) Int. Cl.: H02P 8/36, B60Q 1/076, H02H 7/08

(54) **Schaltungsanordnung zur Steuerung eines Schrittmotors**
Switching circuit for controling a stepping motor
Ensemble de commutation pour régler un moteur pas à pas

(30) Priorität: 14.08.1999 DE 19938625
(43) Veröffentlichungstag der Anmeldung: 21.02.2001
(73) Patentinhaber: Hella KGaA Hueck & Co., 59552 Lippstadt (DE)
(72) Erfinder: Krüger, Dietmar, 59558 Lippstadt (DE)

(56) Entgegenhaltungen:
- EP-A- 0 402 220
- US-A- 4 371 822
- US-A- 5 148 092

## Beschreibung

Die vorliegende Erfindung betrifft eine Schaltungsanordnung zur Steuerung eines Schrittmotors durch eine Steuereinheit nach dem Oberbegriff des Patentanspruchs 1.

Eine Schaltungsanordnung der vorgenannten Art ist aus der EP 0 402 220 B1 bekannt. Die darin beschriebene Schaltungsanordnung zur Steuerung eines Schrittmotors ist in der Lage, Fehlerzustände an dem Schrittmotor zu erkennen. Die Fehlerinformation wird über eine zusätzliche Steuerleitung an ein Steuergerät weitergeleitet.

Die Verwendung eines Schrittmotors für die Leuchtweitenregelung eines Kraftfahrzeugscheinwerfers ist aus der DE 40 17 856 A1 bekannt.

Im Zuge der Integration von Mechanik und Elektronik (Mechatronik) ist es denkbar, den Schrittmotortreiber bzw. Schrittgenerator mit dem Schrittmotor selbst zu integrieren, so dass ein aktives Stellelement entsteht. Zur Ansteuerung dieses aktiven Stellelements werden zwei Leitungen benötigt. Neben Vorteilen bei der Verkabelung ergeben sich auch noch Vorteile bei den Leistungsverlusten, da zwischen Endstufe und Motor nur kurze Leitungen nötig sind, die sich wiederum günstig auf das EMC-Verhalten auswirken.

Nachteilig dabei ist, dass dieses aktive Stellelement nicht diagnosefähig ist. Selbst wenn die üblicherweise verwendeten Schrittmotortreiber - IC's eine Fehlererkennung besitzen, können diese Fehler nicht zurückgemeldet werden.

Aus der US-A-4 371 822 ist ebenfalls eine Schaltungsanordnung zur Steuerung eines Schrittmotors durch eine Steuereinheit bekannt, wobei die Schaltungsanordnung eine Endstufe, die mit dem Schrittmotor elektrisch verbindbar ist, ein Schrittgenerator sowie mindestens eine erste Steuerleitung, die die Steuereinheit mit dem Schrittgenerator verbinden kann, umfasst. Die Schaltungsanordnung verfügt über Mittel, die bei Vorliegen eines Fehlers an dem Schrittmotor die mindestens eine erste Steuerleitung auf ein vorgegebenes Potential legen kann. Bei dieser Schaltungsanordnung erweist sich als nachteilig, dass die Steuereinheit das Anlegen des vorgegebenen Potentials nicht erkennen kann.

Der vorliegenden Erfindung liegt das Problem zugrunde, eine Schaltungsanordnung der eingangs genannten Art zur Steuerung eines Schrittmotors insbesondere für die Leuchtweitenregelung eines Fahrzeugscheinwerfers zu schaffen, bei der eine Rückmeldung von Fehlern an dem Schrittmotor zu der Steuereinheit unter Beibehaltung der vorgegebenen Anzahl an Steuerleitungen möglich ist.

Dieses Problem wird durch eine Schaltungsanordnung nach Patentanspruch 1 gelöst. Erfindungsgemäß ist vorgesehen, daß die Schaltungsanordnung über Mittel verfügt, die bei Vorliegen eines Fehlers an dem Schrittmotor die mindestens eine Steuerleitung auf ein vorgegebenes Potential legen kann, wobei die Steuereinheit das Anliegen des vorgegebenen Potentials erkennen kann. Die erfindungsgemäße Schaltungsanordnung ermöglicht es, unter Beibehaltung der Anzahl der Steuerleitungen Fehlermeldungen zu der Steuereinheit zu übertragen.

In einer bevorzugten Ausführungsform ist vorgesehen, daß die Mittel, die bei Vorliegen eines Fehlers an dem Schrittmotor die mindestens eine Steuerleitung auf ein vorgegebenes Potential legen können, einen Transistor umfassen. Transistoren sind handelsübliche und kostengünstige Bauelemente, die zudem die nötige mechanische Robustheit für den Einsatz in Kraftfahrzeugen aufweisen.

In der bevorzugten Ausführungsform ist weiterhin vorgesehen, daß der Transistor im durchgeschalteten Zustand die mindestens eine Steuerleitung auf das vorgegebene Potential legen kann. Ein Transistor ist im durchgeschalteten Zustand niederohmig, so daß die Steuerleitung zuverlässig auf das vorgegebene Potential gelegt werden kann.

Vorteilhaft ist es, wenn der Transistor emittergeschaltet ist. Handelsübliche Transistoren haben in dieser Betriebsart einen besonders geringen Emitter-Kollektorwiderstand.

In einer bevorzugten Ausführungsform ist vorgesehen, daß die mindestens eine oder eine der Steuerleitungen auf Massepotential gelegt werden kann. Das Massepotential läßt sich in einem Kraftfahrzeug besonders einfach abgreifen.

In der bevorzugten Ausführungsform kann weiterhin vorgesehen sein, daß die Mittel, die bei Vorliegen eines Fehlers an dem Schrittmotor die mindestens eine Steuerleitung auf ein vorgegebenes Potential legen können, eine Diagnoseschaltung umfassen, welche elektrische Fehler in der Beschaltung des Schrittmotors oder mechanische Fehler, die elektrisch mittelbar meßbar sind, messen kann. Auf diese Weise lassen sich Fehler ohne die Messung mechanischer Größen und ohne zusätzliche Diagnosemittel an dem Schrittmotor selbst ermitteln.

In einer bevorzugten Ausführungsform ist weiterhin vorgesehen, daß die Diagnoseschaltung mehrere Ausgänge hat, deren Signale mittels einer logischen Verknüpfungseinheit zu einem gemeinsamen Signal einer dritten Steuerleitung zusammengefaßt sind. Es können so mehrere Fehler detektiert werden, die über eine gemeinsame dritte Steuerleitung weitergeleitet werden.

Vorteilhafterweise kann die Verknüpfungseinheit die Funktion eines logischen Oder haben. Das Auftreten eines jeden Fehlers führt so unabhängig vom Vorhandensein eines anderen Fehlers zur Weiterleitung einer Fehlermeldung.

In einer weiteren Ausführungsform ist vorgesehen, daß die Schaltungsanordnung zusätzlich zu der ersten Steuerleitung über eine zweite Steuerleitung verfügt, wobei die Mittel wenigstens eine der Steuerleitungen auf ein vorgegebenes Potential legen können. Diese Schaltungsanordnung nutzt die aktuell übliche Technik eines Leuchtweitenregler-Stellers, bei der zwei Steuerleitungen notwendig sind.

In einer weiteren Ausführungsform kann vorgesehen sein, daß die Diagnoseschaltung eine Mehrzahl von Ausgängen hat, deren Signale mittels mindestens einer logischen Verknüpfungseinheit zu Signalen von mehreren dritten Steuerleitungen zusammengefaßt sind. Auf diese Weise können komplexe Störungsmeldungen übertragen werden, die auch über die Art der Störung und nicht nur deren Vorhandensein Aufschluß geben können.

Vorteilhaft ist es, wenn bei der zweiten Ausführungsform die dritten Steuerleitungen jeweils mit einem Transistor verbunden sind, der die erste Steuerleitung oder die zweite Steuerleitung auf ein vorgegebenes Potential legen kann. Bei dieser Ausführungsform ist für jeden zu übermittelnden Fehler ein bestimmtes Potential auf einer der beiden Steuerleitungen vorzusehen. Durch die Detektion, daß dieses Potential an der jeweiligen Steuerleitung anliegt, kann die Steuereinheit die Art des Fehlers an dem Schrittmotor ermitteln.

Im folgenden wird ein Ausführungsbeispiel unter Bezugnahme auf die beiliegenden Abbildungen näher beschrieben. Dabei zeigen
- Fig. 1: ein Blockschaltbild einer erfindungsgemäßen Schaltungsanordnung zur Übermittlung von Fehlerinformationen eines Schrittmotors;
- Fig. 2: ein Blockschaltbild einer erfindungsgemäßen Schaltungsanordnung zur Ermittlung von Fehlerinformationen eines Schrittmotors in einer zweiten Ausführungsform.

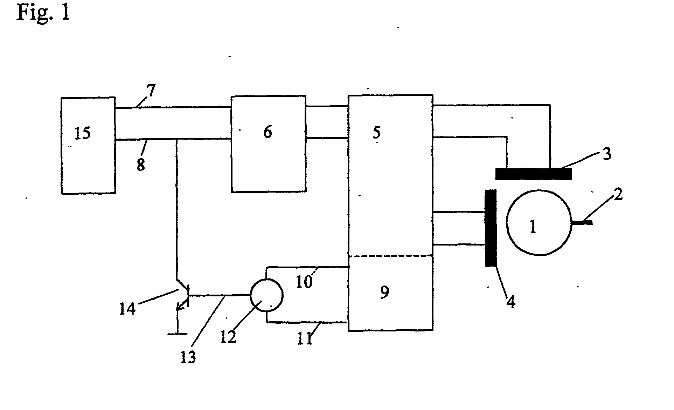

Wie aus Fig. 1 ersichtlich ist, ist ein Schrittmotor 1 abtriebsseitig mit einem Stellelement 2 zur Leuchtweitenregelung eines Fahrscheinwerfers eines Kraftfahrzeuges versehen. Der Schrittmotor 1 verfügt über eine erste Wicklung 3 sowie eine zweite Wicklung 4. Diese sind an eine Endstufe 5 angeschlossen, welche von einem Schrittgenerator 6 gelieferte Steuersignale aufbereitet und ausgangsseitig die nötige Leistung zur Verfügung stellen kann. Der Schrittgenerator 6 ist mit einer ersten Steuerleitung 7 zur Bestimmung der Drehrichtung des Schrittmotors 1 sowie mit einer zweiten Steuerleitung 8 zur Bestimmung des Schritt-Taktes verbunden. Die Steuerleitungen 7, 8 sind an eine Steuereinheit 15, die die Leuchtweitenregelung steuert, angeschlossen. Die Steuereinheit 15 ist vorzugsweise ein Mikroprozessor.

Die Endstufe 5 umfaßt eine Diagnoseschaltung 9, welche in der Lage ist, Fehler in der elektrischen Beschaltung der Endstufe 5 oder elektrische sowie indirekt elektrisch meßbare mechanische Fehler des Schrittmotors 1 festzustellen. Im vorliegenden Beispiel ist die Diagnoseschaltung 9 in der Lage, zwei verschiedene Fehlerzustände festzustellen, welche mittels eines ersten Diagnoseanschlusses 10 sowie eines zweiten Diagnoseanschlusses 11 abgefragt werden können. Beide Anschlüsse werden zu einer logische Verknüpfungseinheit 12 geführt. Diese verarbeitet beide Signale zu einem gemeinsamen Steuerungssignal, welches an einer dritten Steuerleitung 13 anliegt. Die dritte Steuerleitung 13 wird an einen Basisanschluß eines Transistors 14 geführt. Bei der vorliegenden Ausführungsform stellt die logische Verknüpfungseinheit 12 ein Oder-Gatter dar, welches die Diagnoseanschlüsse 10 und 11 durch ein nicht ausschließliches logisches Oder miteinander verknüpft. Liegt am ersten oder zweiten Diagnoseanschluß 10, 11 eine Spannung an, so liegt an der dritten Steuerleitung 13 und damit an dem Basisanschluß des Transistors 14 ebenfalls eine Spannung an. Dieses führt dazu, daß der Transistor 14 durchschaltet und die zweite Steuerleitung 8 auf das Massepotential legt. Die Steuereinheit 15 kann nun durch einen Vergleich des an der zweiten Steuerleitung 8 vorgesehenen Sollpotentials mit dem dort anliegenden Istpotential, das je nach Art des Transistors 14 in etwa dem Massepotential entspricht, feststellen, daß ein Fehler vorliegt.

Entsprechend könnte die vorliegende Schaltungsanordnung durch Veränderung der logischen Verknüpfungseinheit 12 so erweitert werden, daß nicht nur die Existenz eines Fehlers sondern ein komplexerer Fehlercode übermittelt werden kann. Dazu könnte die logische Verknüpfungseinheit 12 mit zwei oder mehreren Diagnoseanschlüssen entsprechend dem ersten Diagnoseanschluß 10 und dem zweiten Diagnoseanschluß 12 verbunden sein, wobei ausgangsseitig mehrere Transistoren 14 angeordnet sind. Je nachdem, welcher Transistor 14 durchgeschaltet wird, könnte entweder die erste Steuerleitung 7 oder die zweite Steuerleitung 8 auf ein bestimmtes Potential, beispielsweise entsprechend der hier dargestellten Ausführungen das Massenpotential, gelegt werden, oder es könnte eine der Steuerleitungen 7, 8, je nach durchgeschaltetem Transistor, auf unterschiedliche Potentiale gelegt werden. Zur Überprüfung auf vorliegende Fehler können die Steuerleitungen 7, 8 auf ein Potential gelegt werden, das keinem Fehlerpotential entspricht. Weiterhin darf der Einfluß des die Steuerleitungen 7, 8 ansteuernden Microcontrollers auf das Potential der Steuerleitung im durchgeschalteten Zustand eines der Transistoren 14 nur gering sein. Dies könnte durch eine entsprechend hochohmige Ansteuerung erreicht werden.

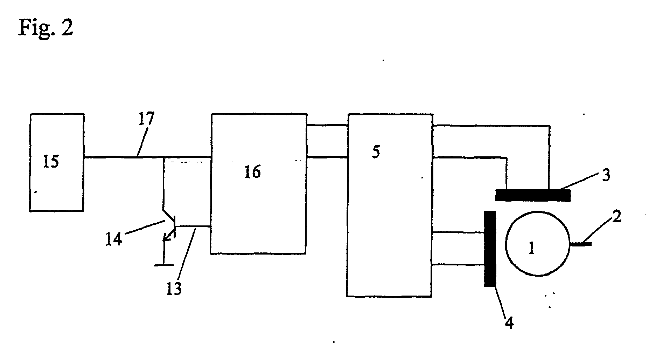

Fig. 2 zeigt eine zweite Ausführungsform einer Schaltungsanordnung. Im Unterschied zu der in Fig. 1 dargestellten Ausführungsform, bei der die Steuerung des Schrittmotors insgesamt über eine Analogschaltung erfolgt, ist in Fig. 2 eine Schrittsteuerung dargestellt, die zur Signalübertragung ein digitales Signal nutzt. Vergleichbare oder identische Baugruppen gegenüber Fig. 1 wurden gleich bezeichnet. Ein Schrittmotor 1 ist mit einem Stellelement 2 verbunden. Die erste Wicklung 3 sowie die zweite Wicklung 4 sind mit der Endstufe 5 verbunden. Die Endstufe 5 wird von einer Schrittsteuerung 16 gesteuert, welche wiederum über eine unidirektionale serielle Steuerleitung 17 gesteuert wird. Die Schrittsteuerung 16 ist in der Lage, Fehler an dem Schrittmotor 1 oder an der Endstufe 5 oder an der Verbindung zwischen beiden zu erkennen. Im Fehlerfall wird die serielle Steuerleitung 17 mit Hilfe des Transistors 14, der vergleichbar mit der in Fig. 1 beschriebenen Ausführungsform geschaltet ist, auf Massepotential gelegt. Wie in der zuvor beschriebenen Ausführungsform ist auch hier eine Steuereinheit 15 dazu in der Lage, zu erkennen, daß die serielle Steuerleitung 17 auf Massepotential gelegt ist.

## Patentansprüche

1. Schaltungsanordnung zur Steuerung eines Schrittmotors (1) durch eine Steuereinheit (15), insbesondere eines Schrittmotors (1) für die Leuchtweitenregelung eines Fahrzeugscheinwerfers, wobei die Schaltungsanordnung eine Endstufe (5), die mit dem Schrittmotor (1) elektrisch verbindbar ist, einen Schrittgenerator (6) sowie mindestens eine erste Steuerleitung (7), die die Steuereinheit (15) mit dem Schrittgenerator (6) verbinden kann, umfasst und die Schaltungsanordnung über Mittel (9, 10, 11, 12, 13, 14) verfügt, die bei Vorliegen eines Fehlers an dem Schrittmotor (1) die mindestens eine erste Steuerleitung (7) auf ein vorgegebenes Potential legen können, **dadurch gekennzeichnet, dass** die Steuereinheit (15) das Anliegen des vorgegebenen Potentials erkennen kann.

2. Schaltungsanordnung nach Anspruch 1, **dadurch gekennzeichnet, daß** die Mittel (9, 10, 11, 12, 13, 14) einen Transistor (14) umfassen.

3. Schaltungsanordnung nach Anspruch 2, **dadurch gekennzeichnet, daß** der Transistor (14) im durchgeschalteten Zustand die mindestens eine Steuerleitung (7, 8) auf das vorgegebene Potential legen kann.

4. Schaltungsanordnung nach einem der Ansprüche 2 oder 3, **dadurch gekennzeichnet, daß** der Transistor (14) in Emitterschaltung beschaltet ist.

5. Schaltungsanordnung nach einem der Ansprüche 1 bis 4, **dadurch gekennzeichnet, daß** die mindestens eine Steuerleitung (7, 8) auf Massepotential gelegt werden kann.

6. Schaltungsanordnung nach einem der Ansprüche 1 bis 5, **dadurch gekennzeichnet, daß** die Mittel (9, 10, 11, 12, 13, 14) eine Diagnoseschaltung (9) umfassen, welche elektrische Fehler in der Beschaltung des Schrittmotors (1) oder mechanische Fehler, die elektrisch mittelbar meßbar sind, messen kann.

7. Schaltungsanordnung nach einem der Ansprüche 1 bis 6, **dadurch gekennzeichnet, daß** die Diagnoseschaltung (9) mehrere Ausgänge (10, 11) aufweist, deren Signale mittels einer logischen Verknüpfungseinheit (12) zu einem gemeinsamen Signal einer dritten Steuerleitung (13) zusammengefaßt sind.

8. Schaltungsanordnung nach Anspruch 7, **dadurch gekennzeichnet, daß** die Verknüpfungseinheit (12) die Funktion eines logischen Oder hat.

9. Schaltungsanordnung nach einem der Ansprüche 1 bis 8, **dadurch gekennzeichnet, daß** diese zusätzlich zu der ersten Steuerleitung (7) über eine zweite Steuerleitung (8) verfügt, wobei die Mittel (9, 10, 11, 12, 13, 14) wenigstens eine der Steuerleitungen (7, 8) auf ein vorgegebenes Potential legen können.

10. Schaltungsanordnung nach einem der Ansprüche 7 bis 9, **dadurch gekennzeichnet, daß** die Diagnoseschaltung (9) eine Mehrzahl von Ausgängen (10, 11) aufweist, deren Signale mittels mindestens einer logischen Verknüpfungseinheit (12) zu Signalen von mehreren dritten Steuerleitungen (13) zusammengefaßt sind.

11. Schaltungsanordnung nach Anspruch 10, **dadurch gekennzeichnet, daß** die dritten Steuerleitungen (13) jeweils mit einem Transistor (14) verbunden sind, der die erste Steuerleitung (7) oder die zweite Steuerleitung (8) auf ein vorgegebenes Potential legen kann.

## Claims

1. Switching circuit for controlling a stepping motor (1) by means of a controller (15), more particularly a stepping motor (1) for adjusting the vertical aim of a vehicle headlamp, the switching circuit comprising a final controlling element (5) which is adapted to be linked electrically to the stepping motor (1), a step generator (6) and not less than one first control line (7) which can link the controller (15) to the step generator (6), and the switching circuit having means available (9, 10, 11, 12, 13, 14) which are able to set the not less than one first control line (7) to a preset potential in the event of a fault at the stepping motor (1), **characterised in that** the controller (15) is able to recognise when the predetermined potential has been set.

2. Switching circuit according to claim 1, **characterised in that** the means (9, 10, 11, 12, 13, 14) comprise a transistor (14).

3. Switching circuit according to claim 2, **characterised in that** in the switched-through state the transistor (14) can set the not less than one control line (7, 8) to the preset potential.

4. Switching circuit according to either of claims 2 and 3, **characterised in that** the transistor (14) is connected as a common emitter.

5. Switching circuit according to any one of claims 1 to 4, **characterised in that** the not less than one control line (7, 8) may be set to frame potential.

6. Switching circuit according to any one of claims 1 to 5, **characterised in that** the means (9, 10, 11, 12, 13, 14) comprise a diagnostic circuit (9) which can measure electrical faults in the wiring of the stepping motor (1) or mechanical faults that can be indirectly measured electrically.

7. Switching circuit according to any one of claims 1 to 6, **characterised in that** the diagnostic circuit (9) incorporates a plurality of outputs (10, 11) the signals of which are combined by means of a logic unit (12) into a common signal from a third control line (13).

8. Switching circuit according to claim 7, **characterised in that** the logic unit (12) has the function of a logic OR.

9. Switching circuit according to any one of claims 1 to 8, **characterised in that** in addition to the first control line (7) it has available a second control line (8), the means (9, 10, 11, 12, 13, 14) being able to set at least one of the control lines (7, 8) to a preset potential.

10. Switching circuit according to any one of claims 7 to 9, **characterised in that** the diagnostic circuit (9) incorporates a plurality of outputs (10, 11) the signals of which are combined by means of at least one logic unit (12) into signals from a plurality of third control lines (13).

11. Switching circuit according to claim 10, **characterised in that** the third control lines (13) are respectively connected to a transistor (14) which is able set the first control line (7) or second control line (8) to a preset potential.

## Revendications

1. Circuit de commutation pour commander un moteur pas à pas (1) grâce à une unité de commande (15), en particulier un moteur pas à pas (1) pour le réglage de la portée d'un phare de véhicule, dans lequel le circuit de commutation comprend un étage de sortie (5), qui peut être relié électriquement au moteur pas à pas (1), un générateur pas à pas (6) ainsi qu'au moins un premier câble de commande (7), qui peut relier l'unité de commande (15) au générateur pas à pas (6), et le circuit de commutation dispose de moyens (9, 10, 11, 12, 13, 14), qui peuvent placer le au moins premier câble de commande (7) à un potentiel prédéterminé lors de l'existence d'une erreur dans le moteur pas à pas (1), **caractérisé en ce que** l'unité de commande (15) peut reconnaître l'existence du potentiel prédéterminé.

2. Circuit de commutation selon la revendication 1, **caractérisé en ce que** les moyens (9, 10, 11, 12, 13, 14) comprennent un transistor (14).

3. Circuit de commutation selon la revendication 2, **caractérisé en ce que** le transistor (14) peut placer le au moins un câble de commande (7, 8) au potentiel prédéterminé dans l'état commuté.

4. Circuit de commutation selon l'une des revendications 2 ou 3, **caractérisé en ce que** le transistor (14) est câblé dans un montage en émetteur commun.

5. Circuit de commutation selon l'une des revendications 1 un 4, **caractérisé en ce que** le au moins un câble de commande (7, 8) peut être placé à un potentiel de masse.

6. Circuit de commutation selon l'une des revendications 1 à 5, **caractérisé en ce que** les moyens (9, 10, 11, 12, 13, 14) comprennent un circuit de diagnostic, qui peut mesurer les erreurs électriques dans le câblage du moteur pas à pas (1) ou des erreurs mécaniques, qui peuvent être mesurées indirectement électriquement.

7. Circuit de commutation selon l'une des revendications 1 à 6, **caractérisé en ce que** le circuit de diagnostic (9) présente plusieurs sorties (10, 11), dont les signaux sont réunis en un signal commun d'un troisième câble de commande (13) au moyen d'une unité de combinaison logique (12).

8. Circuit de commutation selon la revendication 7, **caractérisé en ce que** l'unité de combinaison (12) possède la fonction d'un OU logique.

9. Circuit de commutation selon l'une des revendications 1 à 8, **caractérisé en ce que** celui-ci dispose en plus du premier câble de commande (7) d'un second câble de commande (8), où les moyens (9, 10, 11, 12, 13, 14) peuvent placer au moins un des câbles de commande (7, 8) à un potentiel prédéterminé.

10. Circuit de commutation selon l'une des revendications 7 à 9, **caractérisé en ce que** le circuit de diagnostic (9) présente une pluralité de sorties (10, 11), dont les signaux sont réunis en signaux provenant de plusieurs troisièmes câbles de commande (13) au moyen d'au moins une unité de combinaison logique (12).

11. Circuit de commutation selon la revendication 10, **caractérisé en ce que** les troisièmes câbles de commande (13) sont reliées respectivement à un transistor (14), qui peut placer le premier câble de commande (7) ou le second câble de commande (8) à un potentiel prédéterminé.
